# EUROPÄISCHE PATENTSCHRIFT

(11) **EP 3 220 223 B1**
(45) Veröffentlichungstag und Bekanntmachung des Hinweises auf die Patenterteilung: **14.07.2021**
(21) Anmeldenummer: 16160679.3
(22) Anmeldetag: 16.03.2016
(51) Int. Cl.: G05B 19/4093

(54) **VERFAHREN ZUR BEARBEITUNG EINES WERKSTÜCKS IN EINER WERKZEUGMASCHINE MIT OPTIMIERTER BEARBEITUNGSZEIT**
METHOD FOR MACHINING A WORKPIECE IN A MACHINE TOOL WITH OPTIMIZED PROCESSING TIME
PROCEDE D'USINAGE D'UNE PIECE A USINER SUR UNE MACHINE D'USINAGE AVEC TEMPS D'USINAGE OPTIMISE

(43) Veröffentlichungstag der Anmeldung: 20.09.2017
(73) Patentinhaber: Siemens Aktiengesellschaft, 80333 München (DE)
(72) Erfinder: Pitz, Thomas, 71263 Weil der Stadt (DE); Spielmann, Ralf, 70569 Stuttgart (DE)

(56) Entgegenhaltungen:
- US-A1- 2003 163 208
- US-A1- 2010 114 359
- US-A1- 2015 039 122

## Beschreibung

Die Erfindung betrifft ein Verfahren zur Bearbeitung eines Werkstücks in einer numerisch gesteuerten Werkzeugmaschine mit einer optimierten Bearbeitungszeit, wobei die numerisch gesteuerte Werkzeugmaschine mit einer Werkzeugmaschinensteuerung verbunden ist und wobei die Bearbeitung von einem in der Werkzeugmaschinensteuerung ablaufenden Teileprogramm gesteuert wird, welches die Bearbeitung des Werkstücks in der Werkzeugmaschine beschreibt.

Eine Bearbeitung eines Werkstückes in einer Werkzeugmaschine wird mit einem sogenannten Teileprogramm oder NC-Programm beschrieben. Ein solches NC-Programm kann zum Beispiel darin bestehen, in einem Werkstück eine Anzahl Bohrlöcher in einem bestimmten Abstand zu bohren.

Bei der Herstellung von Werkstücken ist die Zeit, die zur Bearbeitung notwendig ist, ein wesentlicher wirtschaftlicher Faktor. In vielen Bereichen, besonders bei der Herstellung von komplexen Werkstücken in hoher Stückzahl, wie beispielsweise im Automotive- oder auch im Aerospace-Bereich, wird versucht, die Bearbeitungszeit zu minimieren, damit auf einer Werkzeugmaschine mehr Werkstücke in kürzerer Zeit gefertigt werden können.

Heute gibt es bei großen Maschinenbauern oder großen Maschinenherstellern Fachabteilungen, die sich mit dem Thema "Optimierung eines Teileprogramms bezüglich Bearbeitungszeit" befassen. Die Optimierung findet dabei per Hand statt. Von Hand bedeutet, dass während des Ablaufs eines Bearbeitungsprogrammes z.B. Achspositionen s(t) und Achsgeschwindigkeiten v(t) aller bewegten Achsen über der Zeit aufgezeichnet werden, Spezialisten diese s(t)- und/oder v(t)-Diagramme auswerten und einen Rückschluss zu der entsprechenden Teileprogrammstelle suchen, um lokale Verbesserungen durchführen zu können. Anschließend wird die Teileprogrammstelle verändert und/oder es werden Maschinenparameter, die die Eigenschaften der zu optimierenden Stelle beeinflussen, mit dem Ziel einer kürzeren Bearbeitungszeit geändert.

Aus der US2015/0039122A1 ist eine Methode zur Erzeugung optimierter Bewegungsbahnen von Multi-Achs-CNC-Maschinen unter Berücksichtigung von Eigenschaften der Maschine wie Achsgrenzen, Maximalgeschwindigkeit etc. bekannt. Dabei werden zwischen einen Startpunkt und einem Endpunkt mehrere Bewegungsbahnen generiert und simuliert und zur Bearbeitung des Werkstücks eine Bewegungsbahn mit einer relativ kurzen Bearbeitungszeit ausgewählt. Durch kann die Bearbeitungszeit reduziert werden.

Der Erfindung liegt die Aufgabe zugrunde, ein Verfahren zur Bearbeitung eines Werkstücks in einer numerisch gesteuerten Werkzeugmaschine anzugeben, bei der die Bearbeitungszeit automatisch optimiert wird. Die optimierte Bearbeitungszeit des Werkstücks soll im Vergleich zu der Bearbeitungszeit, die mit dem Teileprogramm in einer konkreten Werkzeugmaschine ursprünglich benötigt wird, verringert sein. Dabei soll die Bearbeitungsart und Bearbeitungsreihenfolge am Werkstück nicht verändert werden. Lediglich Bewegungen, die nicht direkt an der Werkstückkontur stattfinden, dürfen im Hinblick auf die Optimierung der Bearbeitungszeit verändert werden.

Die Aufgabe wird durch ein Verfahren mit den Merkmalen des Anspruchs 1 gelöst.

Im Unterschied zu dem bisher üblichen Vorgehen wird das Teileprogramm nach dem Laden in die Werkzeugmaschinensteuerung nicht unmittelbar zur Bearbeitung des Werkstücks aktiviert, sondern mit den konkreten Parametern der Werkzeugmaschine einer Vorverarbeitung unterworfen. Das Teileprogramm wird in einer Simulationsanalyse automatisch von der Werkzeugmaschinensteuerung untersucht, um Optimierungspotential bei der Bearbeitungszeit zu finden. Dabei bleiben die der Werkzeugmaschine eigenen Maschinenzyklen unbeachtet, da ein Werkzeugmaschinenhersteller schon selbst auf einen optimalen Ablauf dieser maschineneigenen Zyklen achtet. Die Vorverarbeitung betrifft nur das Teileprogramm selbst.

Aufgrund einer Eingabe z.B. eines Maschinenbedieners wird in der Werkzeugmaschinensteuerung die Teileprogramm-Vorverarbeitung gestartet. Bei dieser Vorverarbeitung finden keine Aktionen der Werkzeugmaschine statt, wie z.B. Bewegungen oder Werkzeugwechsel. Die Simulation des Teileprogrammes auf der Werkzeugmaschinensteuerung findet unter relevanten realen Bedingungen statt. Dieser Punkt ist wichtig, da ein Teileprogramm auf unterschiedlichen Werkzeugmaschinen unterschiedliche Optimierungspotentiale besitzen kann. Bei Werkzeugmaschinen mit niedriger Dynamik, also Werkzeugmaschinen mit eher niedrigen maximalen Beschleunigungswerten von Achsbewegungen, liegt der Schwerpunkt des Optimierungspotentials beispielsweise beim "Ecken fahren" liegen.

Bei Werkzeugmaschinen mit hoher Dynamik, also hohen maximalen Beschleunigungswerten von Achsbewegungen, ist das "Ecken fahren" hingegen in der Regel nicht dominant. Bei dieser Art von Werkzeugmaschinen kann es eher wichtig sein, Funktionalitäten zu "parallelisieren". Das betrifft im Teileprogramm insbesondere Steuerbefehle für verschiedene Maschinenfunktionen. Das wären die M-Befehle bei einem Teileprogramm, das den sogenannten G-Code verwendet. Über die M-Befehle werden beispielsweise die Spindel und die Kühlung und Schmierung gesteuert. Sieht das ursprüngliche Teileprogramm vor, die Spindelkühlung (im G-Code der Befehl "M8") zwischen der Anfahrbewegung und der Bearbeitungsbewegung einzuschalten, erfolgt zur Optimierung der Bearbeitungszeit eine Parallelisierung derart, dass das Einschalten des Kühlwassers schon während der Anfahrbewegung stattfindet.

Potentielle Optimierungsbereiche sind langsame Bewegungen der Werkzeugmaschinenachsen, die durch nicht beabsichtigte Programmiersituationen oder Steuerungs-Interna entstehen. Ebenfalls potentielle Optimierungsbereiche sind Bereiche, die zwar bewusst so programmiert sind, jedoch ohne die Absicht, dort langsame Bahnbewegungen zu erzeugen. Die langsame Bahnbewegung entsteht erst durch das Zusammenspiel von Teileprogramm mit der Werkzeugmaschinendynamik, wie maximal mögliche Beschleunigung und/oder maximal möglicher Ruck.

Den über das Kriterium des nicht vorhandenen Werkstückkontakts identifizierten potentiellen Optimierungsbereichen werden Toleranzräume zugeordnet. Dies geschieht automatisch, indem beispielsweise Rückzugsebenen oder Rückzugräume für Transferbewegungen (z.B. eine Bewegung von einer Frästasche zur nächsten) weiter vom Werkstück entfernt erlaubt werden, um einen größeren Manipulationsbereich zu bekommen. Innerhalb der Toleranzräume sind die Bewegungsbahnen frei und werden dann geändert mit dem Ziel, die benötigte Zeit entlang der Bewegungsbahn innerhalb des Toleranzraums zu verringern. Mit anderen Worten, die Zeit zwischen dem Eintritt in den Toleranzraum und dem Austritt aus dem Toleranzraum ist nach der Optimierung kürzer als bei Anwendung des ursprünglichen Teileprogramms.

Aus Sicherheitsgründen wird mit dem derart automatisch geänderten Teileprogramm nochmals eine Simulation der Bearbeitung des Werkstücks gestartet und das Ergebnis zur Anzeige gebracht, wobei dann die optimierten Bewegungsbahnen markiert sind. Erst nach Freigabe durch einen Anwender wird die Werkstückbearbeitung mit dem geänderten Teileprogramm begonnen.

Die erfindungsgemäße Optimierung der Bearbeitungszeit verändert die Bearbeitungsart und Bearbeitungsreihenfolge nicht. Lediglich Bewegungen des Werkzeugs oder des Werkzeughalters, die nicht an der Kontur des Werkstücks stattfinden, werden weiter analysiert und gegebenenfalls geändert. Diese Optimierung bringt einen Zeitvorteil, aber keine Qualitätseinbußen in der Bearbeitung.

Vorteilhafte Ausgestaltungen des erfindungsgemäßen Verfahrens zur Bearbeitung eines Werkstücks sind Gegenstand der abhängigen Patentansprüche 2 bis 13.

Eine vorteilhafte Ausgestaltung ist durch die Merkmale des Anspruchs 11 gegeben. Danach wird der mindestens eine potentielle Optimierungsbereich zusammen mit dem Abschnitt des ursprünglichen Teileprogramms, das die Bahnbewegung in dem mindestens einen potentiellen Optimierungsbereich vorgibt, angezeigt. Damit wird dem Maschinenbediener ein wichtiges Zwischenergebnis des Optimierungsverfahrens angegeben. Dies kann graphisch oder auch im Teileprogrammeditor erfolgen. An dieser Stelle kann auch eine Eingriffsmöglichkeit des Maschinenbedieners in das Optimierungsverfahren gegeben sein.

Eine besonders vorteilhafte Ausgestaltung, insbesondere bei niedrigdynamischen Maschinen, ergibt sich durch die Merkmale des Anspruchs 12. Danach wird die Ermittlung von potentiellen Optimierungsbereichen auf Bereiche der Bewegungsbahn begrenzt, die Werkzeugbewegungen im Eilgang vorgeben. Dort müssten die Achsbewegungen theoretisch mit maximaler Geschwindigkeit erfolgen. In diesen Bereichen der Bewegungsbahn besteht naturgemäß kein Werkstückkontakt.

Eine weitere vorteilhafte Ausgestaltung ist durch die Merkmale des Anspruchs 13 charakterisiert. Danach umfasst die Ermittlung des mindestens einen potentiellen Optimierungsbereichs Anweisungen für Hilfsfunktionen im Teileprogramm. Damit werden zur Optimierung der Bearbeitungszeit Anweisungen im Teileprogramm für Hilfsfunktionen, wie beispielsweise M-Funktionen im G-Code, teilweise parallel zu Anweisungen für Achsbewegungen ausgeführt.

Die vorstehend beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die in Verbindung mit der Zeichnung näher erläutert werden. Hierbei zeigen in schematischer Darstellung
- FIG 1: in einem Blockbild die wesentlichen Schritte einer ersten Variante eines Verfahrens zur Bearbeitung eines Werkstücks in einer numerisch gesteuerten Werkzeugmaschine mit einer optimierten Bearbeitungszeit und
- FIG 2: in einem Blockbild die wesentlichen Schritte einer zweiten Variante eines Verfahrens zur Bearbeitung eines Werkstücks in einer numerisch gesteuerten Werkzeugmaschine mit einer optimierten Bearbeitungszeit.

Eine numerisch gesteuerte Werkzeugmaschine umfasst zunächst die Werkzeugmaschine selbst, mit der ein Werkstück mit Hilfe von Bearbeitungswerkzeugen mehr oder weniger automatisch bis zum gewünschten Fertigteil bearbeitet wird.

Mit der Werkzeugmaschine ist eine Werkzeugmaschinensteuerung verbunden, in der die Spezifikationen der Werkzeugmaschine hinterlegt sind. Dazu gehören Maschinendaten, wie beispielsweise allgemeine Maschinendaten, kanalspezifische Maschinendaten, achsspezifische Maschinendaten, Antriebsmaschinendaten usw. und Settingdaten, die vom Anwender gesetzt werden können.

Die automatische Bearbeitung des Werkstücks wird durch ein Teileprogramm oder NC-Programm vorgegeben, welches die gewünschte Form des herzustellenden Werkstücks und die anzuwendende Technologie angibt.

Die Kernfunktion der Werkzeugmaschinensteuerung besteht in der Erzeugung von Sollwerten oder Führungsgrößen für die einzelnen Bewegungsachsen der Werkzeugmaschine aus den Vorgaben des Teileprogramms unter Beachtung der dynamischen Gegebenheiten der Werkzeugmaschine selbst, die als Maschinendaten in der Steuerung abgelegt sind.

Die Werkzeugmaschinensteuerung enthält ein Bewegungsberechnungsprogramm mit Operationen zur Berechnung von Geometrieelementen. Für die Bearbeitung des Werkstücks werden der Werkzeugmaschinensteuerung mittels des Teileprogramms Anweisungen zur Berechnung der Geometrie an Stützpunkten nach Funktionen oder Bahnelementen (Punkt-zu-Punkt, Gerade, Kreis) mit Angaben zur Bahngeschwindigkeit und weiteren Vorgaben, wie beispielsweise die Steuerung von Hilfsfunktionen (beispielsweise Befehl M8: Kühlmittel Ein) etc. gegeben. Die Geometriebefehle oder Bewegungsbefehle werden in der Steuerung interpretiert oder aufbereitet und zur Ausführung an die Werkzeugmaschine gegeben.

Für die Erzeugung der Sollwerte für eine gewünschte Relativbewegung zwischen Werkzeug und Werkstück sind für jede Bewegungsachse der Werkzeugmaschine mehrere Schritte auszuführen. Aus den Programminformationen werden Bewegungskurven oder Bewegungsbahnen berechnet. Daraus werden Führungsgrößen zur Weg-Zeit-Bewegung in den Koordinaten oder Achsen erzeugt. Schließlich wird die Bewegung in den einzelnen Koordinaten oder Achsen in der Werkzeugmaschine geregelt.

Neben der vorstehend angegebenen Wegesteuerung gehören zum Kernbereich einer Werkzeugmaschinensteuerung weitere Funktionen, wie zum Beispiel das Werkzeughandling, Überwachungen und Korrekturrechnungen, Hilfsfunktionsausgaben, Behandlung von Ausnahmesituationen und Alarmen, Freigaben und Stoppen von Bewegungen, Override, Überlagerung von Geschwindigkeiten und Beschleunigungen, Überlagerung von Bewegungen an Bewegungs-übergängen und reale oder auch virtuelle Bewegungen/Achsen sowie Simulationsbetriebsarten.

Zur Bearbeitung des Werkstücks wird das Teileprogramm (NC-Programm) in die Werkzeugmaschinensteuerung übertragen und dort abgearbeitet. Wenn das Teileprogramm für die identische Bearbeitung ein weiteres Mal gestartet wird, hat die Werkzeugmaschinensteuerung normalerweise keine Vorkenntnisse zu der früheren Abarbeitung, d.h. die Werkzeugmaschinensteuerung berechnet immer alle Operationen/Schleifen etc. so, wie wenn diese das Teileprogramm zum ersten Mal abarbeitet.

Die bekannte Funktionalität der Werkzeugmaschinensteuerung wird zur Optimierung der Bearbeitungszeit eines Werkstücks nun erweitert.

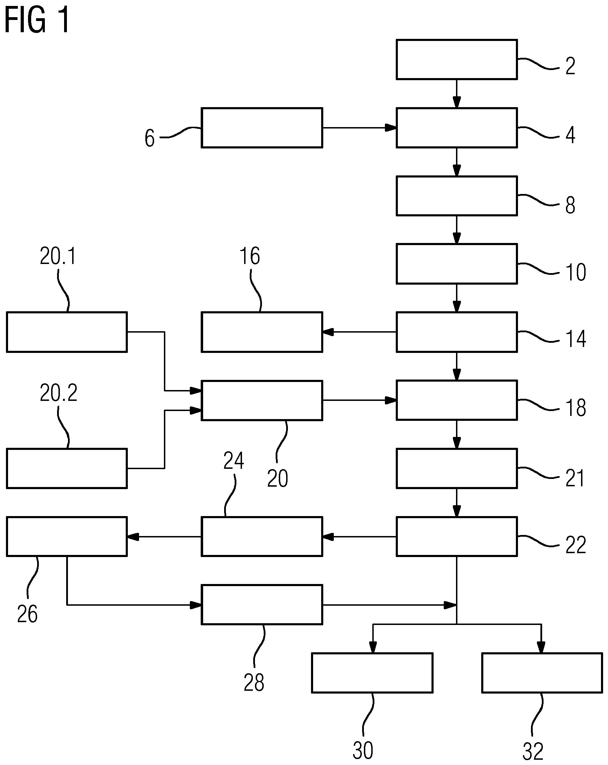

Die wesentlichen Schritte einer ersten Variante eines Verfahrens zur Bearbeitung eines Werkstücks in einer numerisch gesteuerten Werkzeugmaschine mit einer optimierten Bearbeitungszeit sind in FIG 1 gezeigt.

In einem ersten Verfahrensschritt 2 wird ein ursprüngliches Teileprogramm in die Werkzeugmaschinensteuerung geladen. In einem Simulationsschritt 4 wird eine Bearbeitung des Werkstücks mit dem ursprünglichen Teileprogramm unter Berücksichtigung von maschinenspezifischen Daten 6 der Werkzeugmaschine nachgebildet. In dem Simulationsschritt 4 finden in der Werkzeugmaschine keine Aktionen statt, wie z.B. Bewegungen oder Werkzeugwechsel etc. Die Simulation des Teileprogrammes auf der Werkzeugmaschinensteuerung findet jedoch unter relevanten realen Bedingungen der gegebenen Werkzeugmaschine statt.

Das Ergebnis des Simulationsschritts 4 ist eine Bewegungsbahn 8 in der Werkzeugmaschine, die zu jedem Zeitpunkt t zumindest den Ort s(t) eines Werkzeugs oder einer Werkzeughalterung angibt.

In einem nachfolgenden Analyseschritt 10 wird die Bewegungsbahn 8 in Bereiche klassifiziert, in denen das Teileprogramm verändert werden darf, und in Bereiche, in denen es unverändert bleiben muss. In dem ersten Ausführungsbeispiel werden die Bereiche der Bewegungsbahn 8, wo kein Werkstückkontakt besteht, als potentielle Optimierungsbereiche 14 klassifiziert.

Im Verfahrensschritt 16 werden die potentiellen Optimierungsbereiche 14 auf der NC-Bedientafel graphisch oder in Textform dargestellt. Zusätzlich können die dazugehörigen NC-Programmsätze über den Programmeditor angegeben werden.

Für jeden Bereich der Bewegungsbahn 8 ist in der Werkzeugmaschinensteuerung derjenige Satz des Teileprogramms bekannt, der diesen Bereich der Bewegungsbahn 8 erzeugt. Damit sind in der Werkzeugmaschinensteuerung die Sätze im Teileprogramm identifiziert, die zur Optimierung der Bearbeitungszeit verändert werden dürfen.

Der mindestens eine potentielle Optimierungsbereich 14 wird in einem Verfahrensschritt 18 mit einem Toleranzraum 20 verknüpft oder - anders ausgedrückt - dem potentiellen Optimierungsbereich 14 wird ein Toleranzraum 20 zugeordnet. Der Toleranzraum 20 gibt einen Raumbereich um die potentiellen Optimierungsbereiche 14 der Bewegungsbahn 8 vor, in dem der Verlauf der Bewegungsbahn frei bestimmt werden kann. Das Verfahren zur Optimierung der Bearbeitungszeit kann angewendet werden, wenn mindesten ein potentieller Optimierungsbereich 14 existiert. Mehrere potentielle Optimierungsbereiche 14 finden sich bei komplexen Werkstückbearbeitungen. Die einzelnen Optimierungsbereiche 14 sind in diesem Fall durch Bewegungen mit Werkstückkontakt voneinander getrennt.

Der Toleranzraum 20 wird aus einen ersten Toleranzteilraum 20.1 gebildet, der durch Geometriewerte der Werkzeugmaschine vorgegeben wird. Typischerweise wird der erste Toleranzteilraum 20.1 definiert, indem der Rückzugsraum, in dem Transferbewegungen stattfinden, also Bewegungen ohne Werkstückkontakt, weiter vom Werkstück entfernt erlaubt werden, um einen größeren Manipulationsbereich zu bekommen. Der erste Toleranzteilraum 20.1 kann beispielsweise durch einen Raum definiert werden, der einen bestimmten Mindestabstand zur Kontur des Werkstücks aufweist und der sich von der Kontur des Werkstücks weg erstreckt. Der Toleranzteilraum 20.1 kann auch als Toleranzschlauch um die Bewegungsbahn 8 definiert werden. Prinzipiell können für jede Achse eigene Grenzen für den Toleranzteilraum 20.1 festgelegt werden, so dass beispielsweise die Bewegungsbahn in x-Richtung um 5 mm und in z-Richtung um 20 mm von der Bewegungsbahn 8 nach dem ursprünglichen Teileprogramm abweichen kann. Die Zahlenwerte sind selbstverständlich nur beispielhaft.

Anhand von Dynamikdaten der gesteuerten Werkzeugmaschine, z.B. maximale Beschleunigung und maximale Geschwindigkeit pro Achse, wird ein zweiter Toleranzteilraum 20.2 pro Achse berechnet. Dieser aus den Dynamikdaten der Werkzeugmaschine gebildete zweite Toleranzteilraum 20.2 ist durch den Weg bestimmt, den eine Achse bei maximaler Beschleunigung benötigt, um die maximale Geschwindigkeit zu erreichen. Es wird sodann das Minimum der Toleranzen aus dem ersten Toleranzteilraum 20.1 und dem zweiten Toleranzteilraum 20.2 gesucht. Das Ergebnis ist der (resultierende) Toleranzraum 20.

In einem nächsten Verfahrensschritt 21 erfolgt die Optimierung der Bearbeitungszeit. Es wird dabei eine optimierte Bewegungsbahn bestimmt, die es erlaubt, das Werkzeug oder den Werkzeughalter in einer kürzest möglichen Zeit zu bewegen. Die Optimierung 21 erfolgt unter Berücksichtigung der räumlichen Gegebenheit oder der Geometrie, in der sich das Werkzeug oder der Werkzeughalter bewegen können, und der Dynamik der realen Werkzeugmaschine entsprechend wie durch den ersten und/oder zweiten Toleranzteilraum 20.1 bzw. 20.2 vorgegeben ist.

In dem Verfahrensschritt 21 wird zur Optimierung zunächst eine optimale Überschleiflänge in der Bewegungsbahn bestimmt. Beim Überschleifen werden einzelne durch das NC-Programm vorgegebene Positionen nur näherungsweise angefahren und die Bewegung wird an diesen näherungsweise angefahrenen Positionen nicht abgebremst. In dem Toleranzraum 20 wird eine Bewegungsführung erzeugt, die die Toleranzen ausnutzt. Dabei ist zu beachten, dass die Bewegung nicht einzelne Ecken in der Bewegungsbahn 8 behandelt und/oder überschleift, sondern die Bewegung wird innerhalb des Toleranzraums 20 frei und optimal generiert. Ist der Toleranzraum 20 durch den zweiten Toleranzteilraum 20.2 definiert, so ist die Bewegungsführung optimal bezüglich der Bearbeitungszeit, da die Bewegungen der Achsen mit maximaler Dynamik überlagert werden können. Falls einige Toleranzen im Toleranzraum 20 aus dem ersten Toleranzteilraum 20.1 bestimmt sind, so ist die Bewegungsführung optimal unter der Nebenbedingung, dass geometrische Randbedingungen eingehalten werden müssen.

Wie oben schon beschrieben wurde, ist der erste Toleranzteilraum 20.1 vom Anwender vorab definiert worden, entweder über eine globale Toleranz oder über verschiedene Achstoleranzen oder über den geometrischen Raum in der Maschine. Bei der Optimierung 21 wird also versucht, sowohl das Minimum des ersten Toleranzteilraums 20.1 als auch das Minimum des zweiten Toleranzteilraums 20.2 einzuhalten.

Die Änderungen der Bewegungsbahn werden durch entsprechende Änderungen in das Teileprogramm übernommen. Die Änderung kann beispielsweise darin bestehen, dass bestimmte Geometrieelemente in den entsprechenden Sätzen im Teileprogramm automatisch geändert werden.

Im Allgemeinen werden die veränderten Sätze durch Polynom-, Spline- oder sogenannte NURBS-Sätze (NURBS = non-uniform rational B-splines = nicht-uniforme rationale B-Splines) ausgetauscht. Dadurch ergibt sich ein geometrisch beschriebenes Teileprogramm, welches auf diesem Maschinentyp zeitoptimal abgearbeitet werden kann. Sätze, die nicht verändert werden dürfen, können beispielsweise im Teileprogramm mit dem Befehl G9 aus dem G-Code markiert werden.

Mit dem modifizierten Teileprogramm 22 werden in einer nachfolgenden Simulation (Verfahrensschritt 24) die nach der Optimierung 21 modifizierten Bewegungsbahnen in der Werkzeugmaschine nachgebildet. Die geänderten Bereiche in den Bewegungsbahnen werden im Verfahrensschritt 26 auf der NC-Bedientafel markiert dargestellt.

Nach einer Freigabe 28 durch den Maschinenbediener erfolgt die tatsächliche Bearbeitung des Werkstücks mit dem bearbeitungszeitoptimierten Teileprogramm im Verfahrensschritt 30. Zusätzlich wird das bearbeitungszeitoptimierte Teileprogramm in der Werkzeugmaschinensteuerung für eine Bearbeitung weiterer gleichartiger Werkstücke im Verfahrensschritt 32 gespeichert.

Zur Verringerung des Aufwands bei der Ermittlung der Optimierungsbereiche können die vorstehend angegebenen Kriterien nur auf Bereiche angewendet werden, die auf Schritte des Teileprogramms beruhen, mit denen Werkzeugbewegungen im Eilgang vorgeschrieben werden.

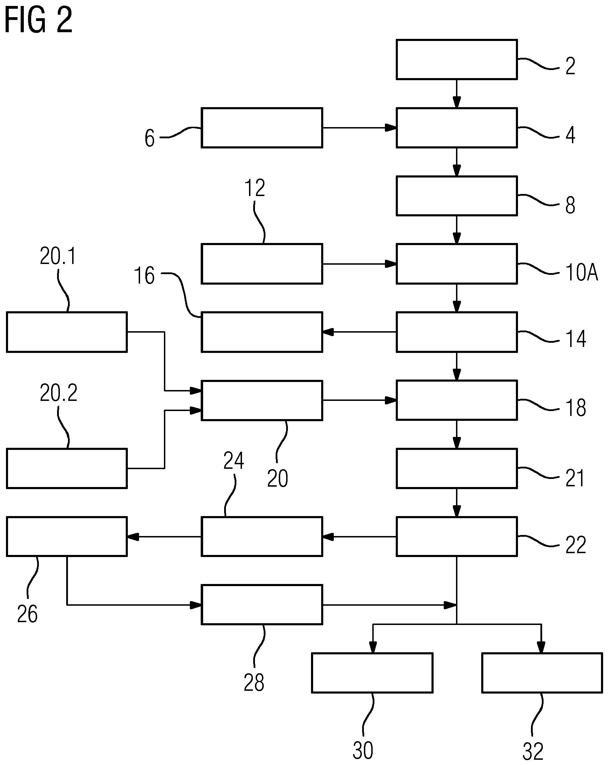

Das Blockbild in FIG 2 zeigt die wesentlichen Schritte einer zweiten Variante eines Verfahrens zur Bearbeitung eines Werkstücks in einer numerisch gesteuerten Werkzeugmaschine mit einer optimierten Bearbeitungszeit. Verfahrensschritte mit gleichen Funktionen wie bei der ersten Variante erhalten die gleichen Bezugszeichen wie in FIG 1.

Auch bei der zweiten Variante wird im Verfahrensschritt 2 ein ursprüngliches Teileprogramm zur Bearbeitung eines Werkstücks in einer numerisch gesteuerten Werkzeugmaschine in die Werkzeugmaschinensteuerung geladen. Im Verfahrensschritt 4 wird die Bearbeitung des Werkstücks mit dem ursprünglichen Teileprogramm simuliert. Dabei wird zu jedem Zeitpunkt t eine Bewegungsbahn 8 ermittelt, die neben dem Weg s(t) zumindest auch die Geschwindigkeit v(t) angibt. Zusätzlich können auch zu jedem Zeitpunkt t die Beschleunigung a(t) und/oder der Ruck r(t) ermittelt werden.

Geändert werden dürfen nur die Bereiche der Bewegungsbahn 8, wo kein Werkstückkontakt besteht. Die Bereiche ohne Werkstücckontakt sind auch hier generell potentielle Optimierungsbereiche. In einem Verfahrensschritt 10A werden in der zweiten Variante zur Klassifizierung Bereiche der Bewegungsbahn identifiziert, in denen die tatsächlichen Geschwindigkeit v(t) kleiner als eine maximal mögliche Maschinengeschwindigkeit ist.

Des Weiteren werden Bereiche mit hohen Beschleunigungswerten a(t) identifiziert. Hohe Beschleunigungswerte bedeuten hohe Geschwindigkeitsänderungen. Insbesondere bedeutet eine starke Abbremsung mit einer unmittelbar nachfolgenden starken Beschleunigung auf Optimierungspotential hin. Es können auch noch Rucke r(t) entlang der Bewegungsbahn ausgewertet werden. Es wird also in dem Verfahrensschritt 10A die Dynamik der Bewegung analysiert. Die Bereiche der Bewegungsbahn, in denen ein Überoder Unterschreiten von Grenzwerten analysiert wird, werden als potentielle Optimierungsbereiche klassifiziert oder identifiziert. Dabei sind die Grenzwerte, die bei Über- oder Unterschreiten den potentiellen Optimierungsbereich 14 bestimmen, von einem Maschinenbediener oder auch von dem Teileprogramm in einem Verfahrensschritt 12 vorgebbar. Auf diese Weise wird mindestens ein potentieller Optimierungsbereich 14 identifiziert.

Die nachfolgenden Verfahrensschritte entsprechen den schon beschriebenen Verfahrensschritten der ersten Variante. In einem Verfahrensschritt 18 wird der potentielle Optimierungsbereich 14 oder die potentiellen Optimierungsbereiche 14 mit einem Toleranzraum 20 verknüpft. Im Verfahrensschritt 21 erfolgt eine Bestimmung der zeitoptimierten Bewegungsbahn unter Ausnutzung des Toleranzraums 20. Die nachfolgenden Verfahrensschritte 22, 24, 26, 28, 30 werden analog wie bei der ersten Variante nacheinander durchlaufen.

Im Allgemeinen wird die Bewegungsbahn 8 im potentiellen Optimierungsbereich 14 nach der Optimierung "runder". Beispielsweise wird der ursprünglich, z.B. "eckige" Verlauf der Bewegungsbahn durch Kreisbögen oder Spline-Funktionen modifiziert. Dadurch ergeben sich für die Bewegungsbahn in diesem Bereich geringere Geschwindigkeitsänderungen bei gleichzeitig reduzierter Durchlaufzeit. Lediglich die Durchtrittspunkte der Bewegungsbahn 8 zum Toleranzraum 20 sind fest und somit als Fixpunkte für einen entsprechend optimierten Verlauf der Bewegungsbahn vorgegeben.

## Patentansprüche

1. Verfahren zur Bearbeitung eines Werkstücks in einer numerisch gesteuerten Werkzeugmaschine mit einer optimierten Bearbeitungszeit, bei der die Bearbeitungszeit automatisch optimiert wird, wobei die numerisch gesteuerte Werkzeugmaschine mit einer Werkzeugmaschinensteuerung verbunden ist und wobei die Bearbeitung von einem in der Werkzeugmaschinensteuerung ablaufenden Teileprogramm, welches die Bearbeitung des Werkstücks in der Werkzeugmaschine beschreibt, gesteuert wird, mit den Schritten:
- Laden (2) eines ursprünglichen Teileprogramms in die Werkzeugmaschinensteuerung,
- Simulation (4) der Bearbeitung des Werkstücks mit dem ursprünglichen Teileprogramm durch die Werkzeugmaschinensteuerung, wobei eine von dem ursprünglichen Teileprogramm erzeugte Bewegungsbahn (8) auf der Werkzeugmaschinensteuerung ermittelt wird,
- Klassifizieren (10, 10A), durch die Werkzeugmaschinensteuerung, der Bewegungsbahn (8) in mindestens einen potentiellen Optimierungsbereich (14), in dem kein Werkstückkontakt besteht,
- Zuordnen (18) eines Toleranzraums (20), in dem der Verlauf der Bewegungsbahn (8) frei ist, zu dem mindestens einen potentiellen Optimierungsbereich (14)
- Ermitteln einer optimierten Bewegungsbahn (21) innerhalb des Toleranzraums (20), wobei die Bewegungszeit entlang der optimierten Bewegungsbahn im Toleranzraum (20) kürzer ist als die Bewegungszeit entlang der ursprünglichen Bewegungsbahn (8) im Toleranzraum (20) durch automatische Änderung der entsprechenden Sätze im Teileprogramm, die in der Werkzeugmaschinensteuerung identifiziert wurden,
- Simulation der Bearbeitung des Werkstücks (24) mit dem geänderten Teileprogramm (22),
- Anzeigen und Markieren (26) der optimierten Bewegungsbahn,
- Freigabe der Änderung im Teileprogramm (28) durch einen Anwender und
- Bearbeitung des Werkstücks mit dem geänderten Teileprogramm (30) .

2. Verfahren nach Anspruch 1, **dadurch gekennzeichnet, dass** der Toleranzraum (20) unter Verwendung eines durch Geometriewerte der Werkzeugmaschine vorgegebenen ersten Toleranzteilraums (20.1) gebildet wird.

3. Verfahren nach Anspruch 1 oder 2, **dadurch gekennzeichnet, dass** der Toleranzraum (20) unter Verwendung eines durch Dynamikwerte der Werkzeugmaschine vorgegebenen zweiten Toleranzteilraums (20.2) gebildet wird.

4. Verfahren nach Anspruch 2 und 3, **dadurch gekennzeichnet, dass** der Toleranzraum (20) aus dem Minimum des ersten Toleranzteilraums (20.1) und des zweiten Toleranzteilraums (20.2) gebildet wird.

5. Verfahren nach einem der voranstehenden Ansprüche, **dadurch gekennzeichnet, dass** das geänderte Teileprogramm (22) für die Bearbeitung mindestens eines weiteren Werkstücks gespeichert wird (32).

6. Verfahren nach einem der voranstehenden Ansprüche, **dadurch gekennzeichnet, dass** bei der Simulation mindestens ein Dynamikwert der Bewegung entlang der Bewegungsbahn (8) ermittelt und zur Ermittlung des mindestens einen potentiellen Optimierungsbereichs (14) verwendet wird, wenn der mindestens eine Dynamikwert einen Grenzwert unter- oder überschreitet.

7. Verfahren nach Anspruch 6, **dadurch gekennzeichnet, dass** als Dynamikwert der Bewegung die Geschwindigkeit entlang der Bewegungsbahn (8) ermittelt wird und zur Klassifizierung (10A) des mindestens einen potentiellen Optimierungsbereichs (14) verwendet wird, wenn die Geschwindigkeit von einer maximal möglichen Maschinengeschwindigkeit abweicht.

8. Verfahren nach Anspruch 7, **dadurch gekennzeichnet, dass** die Geschwindigkeit zur Klassifizierung (10A) des mindestens einen potentiellen Optimierungsbereichs (14) verwendet wird, wenn sie um einen vorgebbaren Betrag (12) von der maximal möglichen Maschinengeschwindigkeit abweicht.

9. Verfahren nach Anspruch 6 bis 8, **dadurch gekennzeichnet, dass** als Dynamikwert Beschleunigung und/oder Ruck entlang der Bewegungsbahn (8) ermittelt werden und zur Klassifizierung (10A) des mindestens einen potentiellen Optimierungsbereichs (14) verwendet werden.

10. Verfahren nach Anspruch 9, **dadurch gekennzeichnet, dass** eine Dynamikgrenze für die Beschleunigung und/oder den Ruck zur Klassifizierung (10A) des mindestens einen potentiellen Optimierungsbereichs (14) verwendet wird.

11. Verfahren nach einem der vorstehenden Ansprüche, **dadurch gekennzeichnet, dass** der mindestens eine potentielle Optimierungsbereich (14) zusammen mit dem Abschnitt des ursprünglichen Teileprogramms, das die Bahnbewegung in dem mindestens einen potentiellen Optimierungsbereich (14) vorgibt, angezeigt wird (16).

12. Verfahren nach einem der vorstehenden Ansprüche, **dadurch gekennzeichnet, dass** sich die Klassifizierung (10, 10A) des mindestens einen potentiellen Optimierungsbereichs (14) auf Schritte des Teileprogramms mit Werkzeugbewegungen im Eilgang beschränkt.

13. Verfahren nach einem der vorstehenden Ansprüche, **dadurch gekennzeichnet, dass** die Klassifizierung (10, 10A) des mindestens einen potentiellen Optimierungsbereichs (14) Anweisungen für Hilfsfunktionen im Teileprogramm umfasst.

## Claims

1. Method for machining a workpiece in a numerically controlled machine tool with an optimised machining time, in which the machining time is optimised automatically, wherein the numerically controlled machine tool is connected to a machine tool controller and wherein the machining is controlled by a parts program running in the machine tool controller which describes the machining of the workpiece in the machine tool, comprising the following steps:
- loading (2) an original parts program into the machine tool controller,
- simulating (4) the machining of the workpiece using the original parts program by way of the machine tool controller, wherein a motion path (8) generated by the original parts program is determined on the machine tool controller ,
- classifying (10, 10A) the motion path (8), by way of the machine tool controller, into at least one area of potential optimisation (14) in which there is no workpiece contact,
- assigning (18) to the at least one area of potential optimisation (14) a tolerance space (20) in which the course of the motion path (8) is open,
- determining an optimised motion path (21) within the tolerance space (20), wherein the movement time along the optimised motion path in the tolerance space (20) is shorter than the movement time along the original motion path (8) in the tolerance space (20) by automatic modification of the corresponding blocks in the parts program which were identified in the machine tool controller,
- simulating the machining of the workpiece (24) using the modified parts program (22),
- displaying and marking (26) the optimised motion path,
- user approval of the modification in the parts program (28) and
- machining of the workpiece using the modified parts program (30) .

2. Method according to claim 1, **characterised in that** the tolerance space (20) is created using a first tolerance sub-space (20.1) predefined by geometry values of the machine tool.

3. Method according to claim 1 or 2, **characterised in that** the tolerance space (20) is created using a second tolerance sub-space (20.2) predefined by dynamic values of the machine tool.

4. Method according to claim 2 and 3, **characterised in that** the tolerance space (20) is formed from the minimum of the first tolerance sub-space (20.1) and of the second tolerance sub-space (20.2).

5. Method according to one of the preceding claims, **characterised in that** the modified parts program (22) is stored for machining at least one other workpiece (32).

6. Method according to one of the preceding claims, **characterised in that**, for the simulation, at least one dynamic value of the movement along the motion path (8) is determined and used to determine the at least one area of potential optimisation (14) if the at least one dynamic value is above or below a limit value.

7. Method according to claim 6, **characterised in that** the speed along the motion path (8) is determined as a dynamic value of the movement and is used for classification (10A) of the at least one area of potential optimisation (14) if the speed is at variance with a maximum possible machine speed.

8. Method according to claim 7, **characterised in that** the speed is used for classification (10A) of the at least one area of potential optimisation (14) if it differs by a predefined absolute value (12) from the maximum possible machine speed.

9. Method according to claim 6 to 8, **characterised in that** acceleration and/or jerk along the motion path (8) is determined as the dynamic value and used for classification (10A) of the at least one area of potential optimisation (14).

10. Method according to claim 9, **characterised in that** a dynamic limit for the acceleration and/or the jerk is used for classification (10A) of the at least one area of potential optimisation (14).

11. Method according to one of the preceding claims, **characterised in that** the at least one area of potential optimisation (14) is displayed (16) together with the section of the original parts program which predefines the path movement in the at least one area of potential optimisation (14) .

12. Method according to one of the preceding claims, **characterised in that** the classification (10, 10A) of the at least one area of potential optimisation (14) is limited to steps of the parts program involving rapid-traverse tool movements.

13. Method according to one of the preceding claims, **characterised in that** the classification (10, 10A) of the at least one area of potential optimisation (14) includes instructions for auxiliary functions in the parts program.

## Revendications

1. Procédé d'usinage d'une pièce dans une machine-outil à commande numérique avec un temps d'usinage optimisé, dans lequel on optimise automatiquement le temps d'usinage, dans lequel la machine-outil à commande numérique est reliée à une commande de machine-outil et dans lequel on commande l'usinage par un programme partiel, qui se déroule dans la commande de la machine-outil et qui décrit l'usinage de la pièce dans la machine-outil, comprend les stades :
- on charge (2) un programme partiel d'origine dans la commande de machine-outil,
- on simule (4) l'usinage de la pièce avec le programme partiel d'origine par la commande de la machine-outil, une trajectoire (8) de déplacement, produite par le programme partiel d'origine, étant déterminée sur la commande de la machine-outil,
- on classe (10, 10A), par la commande de la machine-outil, la trajectoire (8) de déplacement dans au moins une partie (14) d'optimisation potentielle, dans laquelle il n'y a pas de contact de pièce,
- on associe (18) un espace (20) de tolérance, dans lequel le tracé de la trajectoire (8) de déplacement est libre, à la au moins une partie (14) d'optimisation potentielle,
- on détermine une trajectoire (21) de déplacement optimisée dans l'espace (20) de tolérance, le temps de déplacement le long de la trajectoire de déplacement optimisé dans l'espace (20) de tolérance, étant plus bref que le temps de déplacement le long de la trajectoire (8) de déplacement d'origine dans l'espace (20) de tolérance par modification automatique des ensembles correspondant dans le programme partiel, qui ont été identifiés dans la commande de la machine-outil,
- on simule l'usinage de la pièce (24) avec le programme (22) partiel modifié,
- on affiche et on repère (26) la trajectoire de déplacement optimisée,
- on valide la modification dans le programme (28) partiel par un utilisateur, et
- on usine la pièce avec le programme (30) partiel modifié.

2. Procédé suivant la revendication 1, **caractérisé en ce qu'**on forme l'espace (20) de tolérance en utilisant un premier espace (20.1) partiel de tolérance donné à l'avance par des valeurs géométriques de la machine-outil.

3. Procédé suivant la revendication 1 ou 2, **caractérisé en ce que** l'on forme l'espace (20) de tolérance en utilisant un deuxième espace (20.2) partiel de tolérance donné à l'avance par des valeurs dynamiques de la machine-outil.

4. Procédé suivant la revendication 2 et 3, **caractérisé en ce que** l'on forme l'espace (20) de tolérance à partir du minimum du premier espace (20.1) partiel de tolérance et du deuxième espace (20.2) partiel de tolérance.

5. Procédé suivant l'une des revendications précédentes, **caractérisé en ce que** l'on met en mémoire (32) le programme (22) partiel modifié pour l'usinage d'au moins une autre pièce.

6. Procédé suivant l'une des revendications précédentes, **caractérisé en ce que**, à la simulation, on détermine au moins une valeur dynamique du déplacement le long de la trajectoire (8) de déplacement et on l'utilise pour la détermination de la au moins une partie (14) d'optimisation potentielle si la au moins une valeur dynamique est en deçà ou au-delà d'une valeur limite.

7. Procédé suivant la revendication 6, **caractérisé en ce que** l'on détermine comme valeur dynamique du déplacement la vitesse le long de la trajectoire (8) de déplacement et on l'utilise pour la classification (10A) de la au moins une partie (14) d'optimisation potentielle si la vitesse s'écarte d'une vitesse de la machine possible au maximum.

8. Procédé suivant la revendication 7, **caractérisé en ce que** l'on utilise la vitesse pour la classification (10A) de la au moins une partie (14) d'optimisation potentielle, si elle s'écarte d'une valeur (12) absolue pouvant être donnée à l'avance de la vitesse de la machine possible au maximum.

9. Procédé suivant la revendication 6 à 8, **caractérisé en ce que** l'on détermine comme valeur dynamique une accélération et/ou la suraccélération le long de la trajectoire (8) de déplacement et on l'utilise pour la classification (10A) de la au moins une partie (14) d'optimisation potentielle.

10. Procédé suivant la revendication 9, **caractérisé en ce qu'**on utilise une limite dynamique de l'accélération et/ou de la suraccélération pour la classification (10A) de la au moins une partie (14) d'optimisation potentielle.

11. Procédé suivant l'une des revendications précédentes, **caractérisé en ce que** l'on affiche (16) la au moins une partie (14) d'optimisation potentielle ensemble avec la partie du programme partiel d'origine, qui prescrit le déplacement sur la trajectoire dans la au moins une partie (14) d'optimisation potentielle.

12. Procédé suivant l'une des revendications précédentes, **caractérisé en ce que** la classification (10, 10A) de la au moins une partie (14) d'optimisation potentielle se limite à des stades du programme partiel ayant des déplacements de machine rapides.

13. Procédé suivant l'une des revendications précédentes, **caractérisé en ce que** la classification (10, 10A) de la au moins une partie (14) d'optimisation potentielle comprend des instructions pour des fonctions auxiliaires dans le programme partiel.
